Europäisches Patentamt

European Patent Office

Office européen des brevets

(19)

(11) **EP 1 254 079 B1**

(12) **FASCICULE DE BREVET EUROPEEN**

(45) Date de publication et mention
de la délivrance du brevet:
**19.10.2005 Bulletin 2005/42**

(21) Numéro de dépôt: **01907765.0**

(22) Date de dépôt: **09.02.2001**

(51) Int Cl.[7]: **C03C 3/087**, C03C 4/02,
C03C 4/08

(86) Numéro de dépôt international:
**PCT/FR2001/000400**

(87) Numéro de publication internationale:
**WO 2001/058820 (16.08.2001 Gazette 2001/33)**

(54) **COMPOSITIONS DE VERRE GRIS DE TYPE SILICO-SODO-CALCIQUE**

KALKNATRONGLAS-ARTIGE GLASZUSAMMENSETZUNGEN

GREY GLASS COMPOSITIONS OF THE SODA-LIME TYPE

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **11.02.2000 FR 0001764**

(43) Date de publication de la demande:
**06.11.2002 Bulletin 2002/45**

(73) Titulaire: **SAINT-GOBAIN GLASS FRANCE
92400 Courbevoie (FR)**

(72) Inventeurs:
• **BERTHEREAU,Anne, 251,avenue des Thermes
F-73190 Challes les Eaux (FR)**
• **SACHOT, Dominique
F-77330 Ozoire la Ferriere (FR)**

(74) Mandataire: **Cardin, Elise
Saint-Gobain Recherche
39, quai Lucien Lefranc
93303 Aubervilliers Cedex (FR)**

(56) Documents cités:
**EP-A- 0 522 859        EP-A- 0 816 296
EP-A- 0 849 233        WO-A-97/23422
WO-A-99/47463**

**Description**

L'invention concerne des compositions verrières de type silico-sodo-calcique destinées à la production de verres plats. Bien que l'invention ne soit pas limitée à une telle application, elle sera plus particulièrement décrite en référence à des applications pour l'automobile, notamment des vitrages latéraux.

Les vitrages destinés à l'industrie automobile sont soumis à différentes exigences, notamment en ce qui concerne leurs propriétés optiques ; ces exigences sont régies par voie de réglementation, par exemple lorsqu'il s'agit de la transmission lumineuse d'un pare-brise ou bien par souci du confort de l'usager, par exemple en ce qui concerne la transmission énergétique ou bien encore par souci d'esthétisme, notamment en ce qui concerne la couleur.

Concernant les vitrages latéraux, les exigences en matière de transmission lumineuse et de transmission énergétique peuvent être moins rigoureuses que pour des pare-brise. Par contre, les constructeurs automobiles imposent des exigences en matière de couleur et plus précisément en ce qui concerne la longueur d'onde dominante.

La couleur des vitrages est obtenue par adjonction d'agents colorants dans les matières premières destinées à être fondues pour réaliser la matrice verrière. Ces agents colorants sont par exemple le fer, le sélénium, le nickel, le chrome, le cobalt, le tungstène, le vanadium, le cérium, ...

Certains de ces oxydes présentent un coût important et pour cette raison sont évités ou utilisés en très faible quantité; d'autres sont des agents jugés très polluants et nécessitent des installations de filtration qui comme précédemment génèrent des coûts importants. Le sélénium, dont les pertes dans l'atmosphère lors de la fusion sont comprises entre 70 et 85 %, entre dans cette demière catégorie et est jugé très polluant. En outre, le contrôle de sa chimie est très délicat du fait de l'existence de plusieurs degrés d'oxydation du sélénium dans un verre.

Par ailleurs, pour la réalisation de verre gris, le sélénium est habituellement utilisé. Il est donc prévu dans les installations de fusion des systèmes de filtration spécifiques à cet élément pour éviter une pollution de l'atmosphère qui rendent la réalisation de ces compositions onéreuses.

Il est ainsi connu de EP-A-0 849 233 une composition de verre gris qui comprend les agents colorants suivants : $Fe_2O_3$ (0,65 - 0,95%), $TiO_2$ (0,9 - 2,3%), $CeO_2$ (0 - 2%), $CoO$ (0,019 - 0,04%) $Se$ (0 - 0,002 %) et $NiO$ (0,01 - 0,2%). Le verre obtenu présente une transmission lumineuse globale inférieure à 30% pour une épaisseur comprise entre 3,5 et 5 mm.

Les inventeurs se sont ainsi donnés pour mission, la conception de compositions de verre gris de type silico-sodo-calcique possédant une transmission lumineuse globale sous illuminant A ($T_{LA}$) supérieure à 15 % pour une épaisseur de 4,85 mm, dont la réalisation et notamment la fusion est moins onéreuse que les solutions déjà connues, et les risques de pollution dus notamment au sélénium étant écartés.

Ce but a été atteint selon l'invention par une composition de verre gris de type silico-sodo-calcique présentant une transmission lumineuse globale sous illuminant A ($T_{LA}$) supérieure à 15 % pour une épaisseur de 4,85 mm, et comportant les agents colorants consistant en les composés ci-après dans les limites pondérales suivantes :

| | |
|---|---|
| $Fe_2O_3$ | 0,25 -. 0,65%, de préférence 0,3-0,6% et mieux encore 0,3-0,4% |
| $CoO$ | 150 - 250 ppm et de préférence > 185 ppm |
| $NiO$ | 650 - 1000ppm |
| $Cr_2O_3$ | 0 - 150 ppm |
| $Se$ | < 5 ppm |

où $Fe_2O_3$ est le fer total.

Les inventeurs ont ainsi su déterminer de nouvelles compositions de verre gris qui peuvent être réalisées de façon relativement économique et dont le risque de pollution due au sélénium est totalement écarté. En effet, les valeurs de sélénium selon l'invention correspondent à des valeurs d'impuretés pouvant être apportées par certaines matières premières. Les coûts de fabrication sont ainsi réduits puisque des installations de filtration telles que celles décrites précédemment, qui sont souvent onéreuses, sont selon l'invention inutiles.

La teneur en NiO est de préférence supérieure à 700 ppm et de préférence encore comp ise entre 850 et 880 ppm.

Selon une réolisction préférée de l'invention, la transmission énergétique globale $T_E$, est intérieure à 37 %, de préférence inférieure à 30 % et de préférence encore inférieure à 25 % pour une épaisseur de 4,85 mm. De telles exigences correspondent notamment à celles requises pour les applications automobiles pour assurer le confort des personnes se trouvant au sein de l'habitacle.

De préférence encore, la composition de verre présente un rédox inférieur à 0,25 % et de préférence inférieure à 0,22 %. Le rédox est défini par le rapport entre la teneur en FeO sur la teneur en fer total, exprimée sous la forme $Fe_2O_3$, les teneurs étant exprimées en pourcentages pondéraux.

Selon une réalisation avantageuse de l'invention, et notamment pour des applications de type vitrages latéraux pour automobile, la transmission lumineuse globale sous illuminant A ($T_{LA}$) est supérieure ou égale à 20 % et de préférence inférieure à 25 %.

Les verres gris selon l'invention ont avantageusement une longueur d'onde dominante sous illuminant C comprise entre 485 et 495 nm.

De préférence, la composition de verre selon l'invention possède les coordonnées colorimétriques sous illuminant C dans le système L*, a*, b* suivantes :

    L* : 53
    a* : -10 à - 2,5
    b* :- 8 à - 0,5

Les coordonnées L*,a*,b* sont définies dans le système CIELAB, selon lequel, L* représente la clarté, a* représente la composante chromatique Rouge-Vert, et b* représente la composante chromatique Jaune-Bleu.

Selon une première variante de l'invention, la composition de verre possède les coordonnées colorimétriques sous illuminant C suivantes :

    L* : 53
    a* : - 6 à - 2,5
    b* : - 8 à - 3

Selon une seconde variante de l'invention, correspondant à des compositions de verre destinées à la réalisation de vitrages conférant une protection énergétique renforcée, la composition de verre possède les coordonnées colorimétriques suivantes :

    L* : 53
    a* : - 10 à - 5
    b* : - 8 à - 0,5

Selon une réalisation préférée de l'invention, la composition de verre comprend les constituants ci-après dans les limites pondérales suivantes :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |

Concernant l'oxyde MgO, selon un premier mode de réalisation de l'invention, sa teneur est avantageusement supérieure à 2%, notamment par souci économique.

Selon une autre réalisation, sa teneur est inférieure à 2% ; il a été mis en évidence que de telles teneurs en MgO caractérisent la composition selon l'invention par un déplacement du maximum de la bande d'absorption de FeO vers les grandes longueurs d'onde. La limitation du pourcentage de MgO à 2%, et de préférence sa suppression dans les verres de l'invention, en tant qu'ajout volontaire, permettent effectivement d'augmenter leur capacité d'absorption dans l'infrarouge. La suppression totale de MgO, qui joue un rôle important sur la viscosité peut être compensée, au moins en partie, par une augmentation de la teneur en $Na_2O$ et/ou $SiO_2$.

BaO qui permet d'augmenter la transmission lumineuse, peut être ajouté dans les compositions selon l'invention dans des teneurs inférieures à 4%. En effet, BaO a une influence beaucoup plus faible que MgO et CaO sur la viscosité du verre. Dans le cadre de l'invention, l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît, l'introduction d'un pourcentage élevé de BaO majore sensiblement le coût de la composition. Lorsque les verres de l'invention contiennent de l'oxyde de baryum, le pourcentage de cet oxyde est, de préférence, compris entre 0,5 et 3.5% en poids.

Outre le respect des limites définies précédemment pour la variation de la teneur de chaque oxyde alcalino-terreux, il est préférable pour obtenir les propriétés de transmission recherchées, de limiter la somme de pourcentages de MgO, CaO et BaO à une valeur égale ou inférieure à 13%.

Les verres selon l'invention peuvent également contenir jusqu'à 1% d'autres constituants apportés par les impuretés des matières premières vitrifiables et/ou du fait de l'introduction de calcin dans le mélange vitrifiable et/ou provenant de l'utilisation d'agent d'affinage ($SO_3$, Cl, $Sb_2O_3$, $As_2O_3$).

Pour faciliter la fusion et notamment rendre celle-ci mécaniquement intéressante, la matrice présente avantageusement une température, correspondant à une viscosité $\eta$ telle que $\log\eta = 2$, inférieure à 1500°C. De préférence encore et notamment pour la réalisation du substrat à partir d'un ruban de verre obtenu selon la technique "float", la matrice présente une température correspondant à la viscosité $\eta$, exprimée en poise, telle que $\log\eta = 3{,}5$, $T\log\eta = 3{,}5$ et une température de liquidus $T_{liq}$, satisfaisant la relation :

$$T(\log\eta = 3{,}5) - T_{liq} > 20°C,$$

et de préférence la relation :

$$T(\log\eta = 3{,}5) - T_{liq} > 50°C,$$

Afin de mieux apprécier les avantages de la présente invention, des exemples de compositions de verre et leurs propriétés sont données ci-dessous.

Plusieurs séries de verres ont été élaborées à partir des compositions figurant dans les tableaux qui suivent. Tous ces verres ont été élaborés dans des conditions d'oxydo-réduction sensiblement identiques ; leur rédox est compris entre 0,18 et 0,22.

Ces tableaux indiquent également les valeurs des propriétés suivantes mesurées pour des épaisseurs de 4,85 mm :

➡ le facteur de transmission lumineuse globale sous illuminant A ($T_{LA}$) entre 380 et 780 nm,

➡ le facteur de transmission énergétique globale $T_E$ intégrée entre 295 et 2500 nm selon la norme Parry Moon Masse 2,

➡ les coordonnées colorimétriques a*, b*, L*, sous illuminant C,

➡ la longueur d'onde dominante sous illuminant C,

➡ la pureté sous illuminant C.

Chacune des compositions illustrée dans les tableaux a été réalisée à partir de la matrice verrière suivante, dont les teneurs sont exprimées en pourcentages pondéraux, celle-ci étant corrigée au niveau de la silice pour s'adapter aux teneurs en agents colorants ajoutés :

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

Les températures correspondant aux viscosités, exprimées en poise, telles que $\log\eta = 2$ et $\log\eta = 3{,}5$, $T\log2$ et $T\log3{,}5$ ainsi que la température de liquidus $T_{liq}$ sont identiques pour tous les verres ceux-ci étant réalisés à partir de la même matrice verrière et sont les suivantes :

| | |
|---|---|
| Tlog2 (°C) | 1410 |
| Tlog3.5 (°C) | 1100 |
| $T_{liq}$ (°C) | 1060 |

Le premier verre, intitulé R. est un verre de référence dont la composition est usuelle pour les vitrages destinés à l'automobile.

Les verres du premier tableau, numérotés 1 à 9 sont des exemples réalisés selon l'invention et dont les compositions ont été mesurées

Les verres du second tableau, numérotés 10 à 16 sont donnés avec leurs compositions théoriques, celles-ci n'ayant pas été mesurées ultérieurement ; il faut savoir que les pertes en oxydes lors de la fusion sont d'environ 25 à 50 ppm en ce qui concerne NiO, de 15 à 20 ppm en ce qui concerne CoO, et de l'ordre de 10 ppm en ce qui concerne $Cr_2O_3$.

## TABLEAU 1 :

|  | R | 1 | 2 | 3 | 4 | 5 | 6 | 7 | 8 | 9 |
|---|---|---|---|---|---|---|---|---|---|---|
| $Fe_2O_3$ | 1,50 | 0,6 | 0,4 | 0,34 | 0,35 | 0,435 | 0,585 | 0,38 | 0,34 | 0,325 |
| Rédox | 0,24 | 0,215 | 0,213 | 0,194 | 0,203 | 0,193 | 0,209 | 0,218 | 0,20 | 0,205 |
| Se (ppm) | 15 | <5 | <5 | <5 | <5 | <5 | <5 | <5 | <5 | <5 |
| CoO (ppm) | 145 | 160 | 185 | 185 | 190 | 200 | 160 | 180 | 190 | 185 |
| NiO (ppm) | 0 | 720 | 800 | 850 | 870 | 720 | 700 | 800 | 870 | 900 |
| $Cr_2O_3$ (ppm) | 90 | 140 | 0 | 0 | 0 | 140 | 140 | 0 | 0 | 0 |
| $T_{LA}$ (%) 4,85mm | 19,3 | 20,9 | 20,5 | 20,5 | 20,4 | 19,4 | 20,5 | 20,8 | 20,4 | 20,1 |
| $T_E$ (%) 4,85 mm | 12,3 | 25,7 | 33,1 | 35,3 | 35,7 | 30 | 25,2 | 32,6 | 35,8 | 34,9 |
| $a^*$ (C) | -8,35 | -9,41 | -5,50 | -5,19 | -4,90 | -8,06 | -9,53 | -5,58 | -4,99 | -5,38 |
| $b^*$ (C) | 3,09 | -1,63 | -3,06 | -1,89 | -3,81 | -4,84 | -1,83 | -3,35 | -3,76 | -1,00 |
| $L^*$ (C) | 51,62 | 53,83 | 53,18 | 53,01 | 53,06 | 52,28 | 53,46 | 53,53 | 51,6 | 52,5 |
| $\lambda d$ (C) nm | 516 | 492 | 488 | 490 | 487 | 488 | 492 | 488 | 487 | 492 |
| P (C) | 3,62 | 8,84 | 7,97 | 6,23 | 8,55 | 12,23 | 9,22 | 8,36 | 8,50 | 5,26 |

## TABLEAU 2 :

| | R | 10 | 11 | 12 | 13 | 14 | 15 | 16 |
|---|---|---|---|---|---|---|---|---|
| $Fe_2O_3$ | 1,50 | 0,45 | 0,45 | 0,4 | 0,3 | 0,35 | 0,3 | 0,6 |
| Rédox | 0,24 | 0,186 | | 0,195 | 0,203 | | | |
| Se (ppm) | 15 | <5 | <5 | <5 | <5 | <5 | <5 | <5 |
| CoO (ppm) | 145 | 220 | 220 | 205 | 205 | 205 | 205 | 190 |
| NiO (ppm) | 0 | 700 | 700 | 850 | 850 | 850 | 925 | 750 |
| $Cr_2O_3$ (ppm) | 90 | 100 | 150 | 0 | 0 | 0 | 0 | 0 |
| $T_{LA}$ (%) 4,85mm | 19,3 | 20,4 | 20,2 | 20,5 | 21 | 20,7 | 19,8 | 21,3 |
| $T_E$ (%) 4,85 mm | 12,3 | 31,8 | 33,2 | 31,6 | 38,3 | 35,2 | 35,9 | 26,3 |
| a* (C) | -8,35 | -6,64 | -7,52 | -6,1 | -4,8 | -5,26 | -5,1 | -7 |
| b* (C) | 3,09 | -7,60 | -5,64 | -3,15 | -3,8 | -3,46 | -1,67 | -4,45 |
| L* (C) | 51,62 | 53 | 53,47 | 53,19 | 53,35 | 53,01 | 52,14 | 54,26 |
| λd (C) nm | 516 | 485 | 487 | 488 | 487 | 487 | 490 | 487 |
| P (C) | 3,62 | 14,68 | 12,75 | 8,48 | 8,39 | 8,29 | 5,95 | 10,67 |

Les exemples 1 à 16 réalisés selon l'invention montrent qu'il est possible d'obtenir des verres gris satisfaisant les contraintes de transmission lumineuse et éventuellement énergétique que l'on se fixe sans utiliser l'agent colorant sélénium. De telles compositions de verre peuvent donc être fondues à des coûts relativement réduits puisque des installations de filtration du sélénium sont inutiles et en outre les risques de pollution dus à cet agent sont éliminés.

## Revendications

1.   Composition de verre gris de type silico-sodo-calcique présentant une transmission lumineuse globale sous illuminant A ($T_{LA}$) supérieure à 15 % pour une épaisseur de verre égale à 4,85 mm , *caractérisée en ce que* les agents colorants consistent en les composés ci-après dans les limites pondérales suivantes :

| | |
|---|---|
| $Fe_2O_3$ | 0,25-0,65%, de préférence 0,3-0,6% et mieux encore 0,3-0,4% |
| CoO | 150 - 250 ppm et de préférence > 185 ppm |
| NiO | 650 - 1000 ppm |
| $Cr_2O_3$ | 0 - 150 ppm |
| Se | < 5 ppm |

où $Fe_2O_3$ est le fer total.

2.   Composition de verre selon la revendication 1, *caractérisée en ce qu'elle* présente un rédox inférieur à 0,25 et de préférence inférieur à 0,22.

3.   Composition de verre selon la revendication 1 ou 2, *caractérisée en ce que* la transmission énergétique globale $T_E$ est inférieure à 37 % et de préférence inférieure à 25 % pour une épaisseur de 4,85 mm.

4.   Composition de verre selon l'une des revendications 1 à 3, *caractérisée en ce que* le facteur de transmission lumineuse globale sous illuminant A ($T_{LA}$) est supérieur ou égal à 20 % et de préférence inférieure à 25 %.

**5.** Composition de verre selon l'une des revendications 1 à 4, *caractérisée en ce qu*'elle possède les coordonnées colorimétriques L*, a*, b* satisfaisant :

> L* : 53
> a* : -10 à - 2,5
> b* : - 8 à - 0,5.

**6.** Composition de verre selon la revendication 5, *caractérisée en ce qu*'elle possède les coordonnées colorimétriques L*, a*, b* satisfaisant :

> L* : 53
> a* : - 6à-2,5
> b* : - 6à-3

**7.** Composition de verre selon la revendication 5, *caractérisée en ce que qu*'elle possède les coordonnées colorimétriques L*, a*, b* satisfaisant :

> L* : 53
> a* : -10 à - 5
> b* : - 8 à - 0,5.

**8.** Composition de verre selon l'une des revendications précédentes, *caractérisée en ce qu'elle* comprend les constituants ci-après dans les limites pondérales suivantes :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |

**9.** Composition de verre selon l'une des revendications précédentes, *caractérisée en ce que* la différence entre la température correspondant à une viscosité $\eta$, exprimée en poise, telle que $\log\eta = 3,5$, et la température de liquidus $T_{liq}$, est supérieure à 20°C et de préférence supérieure à 50°C.

**10.** Composition de verre selon l'une des revendications précédentes, *caractérisée en ce que* la température correspondant à une viscosité $\eta$, exprimée en poise, telle que $\log\eta = 2$ est inférieure à 1500°C.

**Patentansprüche**

**1.** Grauglaszusammensetzung vom Typ Kalk-Natron-Silicatglas, die bei einer Glasdicke von 4,85 mm einen globalen Lichttransmissionsgrad für Normlichtart A ($T_{LA}$) von über 15 % aufweist, **dadurch gekennzeichnet, dass** die farbgebenden Mittel aus folgenden Verbindungen innerhalb nachstehender Gewichtsgrenzen bestehen:

| | |
|---|---|
| $Fe_2O_3$ | 0,25 bis 0,65 %, vorzugsweise 0,3 bis 0,6 %, und besser noch 0,3 bis 0,4 %, |
| CoO | 150 bis 250 ppm und vorzugsweise > 185 ppm, |
| NiO | 650 bis 1000 ppm, |
| $Cr_2O_3$ | 0 bis 150 ppm, |
| Se | < 5 ppm, wobei |
| | $Fe_2O_3$ das Gesamteisen repräsentiert. |

**2.** Glaszusammensetzung nach Anspruch 1, **dadurch gekennzeichnet, dass** sie einen Redoxgrad von unter 0,25 und vorzugsweise unter 0,22 aufweist.

**3.** Glaszusammensetzung nach Anspruch 1 oder 2, **dadurch gekennzeichnet, dass** bei einer Dicke von 4,85 mm der globale Strahlungstransmissionsgrad $T_E$ weniger als 37 % und vorzugsweise weniger als 25 % beträgt.

**4.** Glaszusammensetzung nach einem der Ansprüche 1 bis 3, **dadurch gekennzeichnet, dass** der globale Lichttransmissionsgrad für Normlichtart A ($T_{LA}$) mehr als oder gleich 20 % und vorzugsweise weniger als 25 % beträgt.

**5.** Glaszusammensetzung nach einem der Ansprüche 1 bis 4, **dadurch gekennzeichnet, dass** sie die Farbkoordinaten L*, a*, b* besitzt, die genügen:

    L*: 53
    a*: -10 bis -2,5
    b*: -8 bis -0,5.

**6.** Glaszusammensetzung nach Anspruch 5, **dadurch gekennzeichnet, dass** sie die Farbkoordinaten L*, a*, b* besitzt, die genügen:

    L*: 53
    a*: -6 bis -2,5
    b*: -6 bis -3.

**7.** Glaszusammensetzung nach Anspruch 5, **dadurch gekennzeichnet, dass** sie die Farbkoordinaten L*, a*, b* besitzt, die genügen:

    L*: 53
    a*: -10 bis -5
    b*: -8 bis -0,5.

**8.** Glaszusammensetzung nach einem der vorhergehenden Ansprüche, **dadurch gekennzeichnet, dass** sie folgenden Bestandteile innerhalb nachstehender Gewichtsgrenzen enthält:

| | |
|---|---|
| $SiO_2$ | 64 bis 75 % |
| $Al_2O_3$ | 0 bis 5 % |
| $B_2O_3$ | 0 bis 5 % |
| CaO | 5 bis 15% |
| MgO | 0 bis 5% |
| $Na_2O$ | 10 bis 18 % |
| $K_2O$ | 0 bis 5 %. |

**9.** Glaszusammensetzung nach einem der vorhergehenden Ansprüche, **dadurch gekennzeichnet, dass** die Differenz zwischen der Temperatur, die einer derartigen in Poise angegebenen Viskosität η, dass log η = 3,5, entspricht, und der Liquidustemperatur $T_{liq}$ mehr als 20 °C und vorzugsweise mehr als 50 °C beträgt.

**10.** Glaszusammensetzung nach einem der vorhergehenden Ansprüche, **dadurch gekennzeichnet, dass** die Temperatur, die einer derartigen in Poise angegebenen Viskosität η, dass log η = 2, entspricht, weniger als 1500 °C beträgt.

**Claims**

**1.** Grey glass composition of the silica-soda-lime type having an overall light transmission under illuminant A ($T_{LA}$) of greater than 15% for a glass thickness equal to 4.85 mm, ***characterized in that*** the colouring agents consist in the constituents given below within the following weight limits:

| | |
|---|---|
| $Fe_2O_3$ | 0.25 - 0.65%, preferably 0.3 - 0.6% and more preferably 0.3 - 0.4% |
| CoO | 150 - 250 ppm and preferably > 185 ppm |
| NiO | 650 - 1000 ppm |

(continued)

| | |
|---|---|
| $Cr_2O_3$ | 0 - 150 ppm |
| Se | < 5 ppm. |

where $Fe_2O_3$ is the total iron.

2. Glass composition according to Claim 1, *characterized in that* it has a redox of less than 0.25 and preferably less than 0.22.

3. Glass composition according to Claim 1 or 2, *characterized in that* the overall energy transmission $T_E$ is less than 37% and preferably less than 25% for a thickness of 4.85 mm.

4. Glass composition according to one of Claims 1 to 3, *characterized in that* the overall light transmission factor under illuminant A ($T_{LA}$) is greater than or equal to 20% and preferably less than 25%.

5. Glass composition according to one of Claims 1 to 4, *characterized in that* it has L*,a*,b* colorimetric coordinates which satisfy:

   L*: 53
   a*: -10 to -2.5
   b*: -8 to -0.5.

6. Glass composition according to Claim 5, *characterized in that* it has L*,a*,b* colorimetric coordinates which satisfy:

   L*: 53
   a*: -6 to -2.5
   b*: -6 to -3.

7. Glass composition according to Claim 5, *characterized in that* it has L*,a*,b* colorimetric coordinates which satisfy:

   L*: 53
   a*: -10 to -5
   b*: -8 to -0.5.

8. Glass composition according to one of the preceding claims, *characterized in that* it comprises the constituents given below within the following weight limits:

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 5% |
| $Na_2O$ | 10 - 18% |
| $K_2O$ | 0 - 5%. |

9. Glass composition according to one of the preceding claims, *characterized in that* the difference between the temperature corresponding to a viscosity $\eta$ expressed in poise, such that $\log\eta = 3.5$, and the liquidus temperature $T_{liq}$ is greater than 20°C and preferably greater than 50°C.

10. Glass composition according to one of the preceding claims, *characterized in that* the temperature corresponding to a viscosity $\eta$, expressed in poise, such that $\log\eta = 2$ is less than 1500°C.